# EUROPEAN PATENT APPLICATION

(11) **EP 4 715 179 A1**
(43) Date of publication of application: **25.03.2026**
(21) Application number: 25200025.2
(22) Date of filing: 03.09.2025
(51) Int. Cl.: F02C 6/08, B64D 31/18, B64D 27/33, F02C 7/32, F02C 9/18, F02K 5/00

(54) **HIGH VOLTAGE ENGINE-MOUNTED ELECTRONICS PRESSURIZATION BLEED SYSTEM**

(30) Priority: 20.09.2024 US 202418891999
(71) Applicant: RTX Corporation, Farmington, CT 06032 (US)
(72) Inventor: AKIN, John, Charlotte (US); BREAULT, Andrew E., Bolton (US); CLARK, Thomas E., Wells (US)
(74) Representative: Dehns

(57) **Abstract**

An electronics pressurization system (100) includes a compressed air source (125) providing pressurized air, a manifold (115), and a case (105a; 105b) containing a first high-voltage electrical system, the case (105a; 105b) comprising a pressurizable vessel and a vent hole (106a, 106b, 106c, 106d; 106e). The compressed air source (125) is connected to the manifold (115), and the manifold (115) is connected to the case (105a; 105b). The compressed air source (125) provides a flow of pressurized air, via the manifold (115) to the case (105a; 105b) to maintain an air pressure in the case (105a; 105b) at a higher-than-ambient pressure.

## Description

### TECHNICAL FIELD

This disclosure relates generally to power distribution at high altitude. More specifically, this disclosure relates to high-voltage engine-mounted electronics pressurization bleed systems.

### BACKGROUND

Industry-wide design trends within the aircraft industry include a push towards greater electrification of aircraft systems, including greater adoption of hybrid combustion-electric drive systems and "bleedless" gas turbines, which do not draw compressed air bled from the compression stages of the engine for use by other components of the aircraft. In many cases, realizing the performance benefits of greater electrification and greater utilization of electrical power without incurring size and weight penalties can be best effected by significantly increasing the voltages of buses and other electrical systems, rather than increasing the power levels by running greater currents at existing voltage levels. This is because increased current uses larger and heavier gauge cabling, but increasing voltages does not. Ensuring the reliable operation of aircraft electrical systems at voltages higher than the historical norm thus provides a source of technical challenges and opportunities for development in the art.

### SUMMARY

This disclosure relates to high voltage, engine-mounted pressurization bleed systems.

In some examples, an electronics pressurization system includes a compressed air source providing pressurized air, a manifold, and a case containing a first high-voltage electrical system, the case comprising a pressurizable vessel and a vent hole. The compressed air source is connected to the manifold, and the manifold is connected to the case. The compressed air source provides a flow of pressurized air, via the manifold to the case to maintain an air pressure in the case at a higher-than-ambient pressure.

In some examples, a method of pressurizing electronic systems at altitude includes obtaining, at a system comprising a compressed air source, pressurized air from the compressed air source. The method includes determining whether one or more threshold conditions for pressurizing a case containing an electronic system is met. The method includes responsive to determining that the one or more threshold conditions for pressurizing the case containing the electronic system is met, pressurizing the case by to a higher-than-ambient pressure by providing a flow of pressurized air from the compressed air source to the case via a manifold. The case comprises a pressurizable vessel and a vent hole. The compressed air source is connected to the manifold, and the manifold is connected to the case.

Any single one or any combination of the following features may be used with the examples described above. The system may include at least one of: a dust filter, a p-trap or a water-catching filter disposed between the compressed air source and the manifold. The system may include an overpressure check valve disposed between the compressed air source and the manifold, wherein the overpressure check valve is configured to reduce the flow of pressurized air to the case. The overpressure check valve may be configured to ensure that an air pressure in the case does not exceed a threshold pressure. The compressed air source may be an electrically powered compressor. The electrically powered compressor may be a compressor for a turbine cooling air boost of a turbofan engine; and wherein the flow of pressurized air is selectively routed to one or both of the turbine cooling air boost system and the manifold. The system may include a first switching valve, a second switching valve and a third modulating valve, such that the first switching valve is configured to receive gas from a fan intake, direct the received gas to the second switching valve in a first position, and direct the received gas elsewhere in a second position. The second switching valve may be configured to direct gas to the electrically powered compressor, receive gas from the first switching valve in a first position, and receive gas from a high-pressure bleed from a compressor stage of the turbofan engine in a second position. The third modulating valve may be configured to receive gas from the electrically powered compressor, direct compressed gas to the manifold in a first position and direct the pressurized air to a turbine boost of the turbofan engine in a second position. The compressed air source may be at least one of a low-pressure compressor (LPC) bleed), an inter-compressor (IC), or a high-pressure bleed of a turbofan engine. The system may include a shut-off valve disposed between an overpressure check valve and the compressed air source, wherein the shut-off valve is configured to stop the flow of air in response to a threshold condition for pressurizing the case. The threshold condition may be at least one of: an altitude threshold, or a power threshold of the turbofan engine.

Other technical features may be readily apparent to one skilled in the art from the following figures, descriptions, and claims.

### BRIEF DESCRIPTION OF THE DRAWINGS

For a more complete understanding of this disclosure, reference is made to the following description, taken in conjunction with the accompanying drawings, in which:
FIGURE 1A illustrates an example system for pressurizing a case containing electrical components in accordance with this disclosure;
FIGURE 1B illustrates another example system for pressurizing a case containing electrical components in accordance with this disclosure; and
FIGURE 2 illustrates an example method for pressurizing a case containing electrical components in accordance with this disclosure.

### DETAILED DESCRIPTION

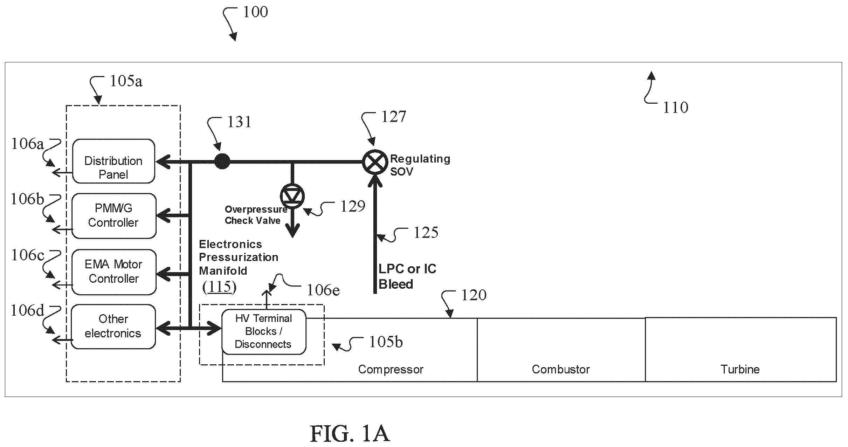

FIGURES 1A through 2, described below, and the various embodiments used to describe the principles of the present disclosure are by way of illustration only and should not be construed in any way to limit the scope of this disclosure. Those skilled in the art will understand that the principles of the present disclosure may be implemented in any type of suitably arranged device or system.

As noted above, macro trends within the aviation industry include, without limitation, a shift towards greater electrification of aircraft systems and a significant increase the in the overall level of electrical power handled by distribution busses and other components of aircraft electrical systems. Skilled artisans will appreciate that the power in an electrical system can be raised by increasing one or both of the voltages in the system or the current in the system. Increasing the current in a system typically requires increasing the gauge of the cabling and the components of the system. For aircraft applications, using heavier gauge components generally implies an increase in weight, which is undesirable. Thus, the general trend has been to realize greater electrification and greater onboard electrical power by increasing the voltages within aircraft electrical systems, including engine-mounted electrical systems.

Historically, engine-mounted electrical systems operated at voltages at less than 300 volts, which, even at high altitude (for example, 50,000 feet (15,240 m) or higher) presented little likelihood of being sufficient to break down the dielectric effect provided by the air between components and permit electricity to discharge between electrical components, either through clearance (*e.g*., electrical arcing directly between components) or creepage (wherein electricity passes between components along the surface of a common insulating material). However, hybrid electric aircraft can have electrical components which operate at much higher voltages, for example 500V or greater, and thus can present issues with unwanted electrical discharge at altitude.

Paschen's law defines the relationship between separation distance between electrodes in air and the voltage at which the dielectric properties of the air between the electrodes breaks down (*e.g*., the distance at which electricity arcs through air between the electrodes) as a function of air pressure. For a given separation between electrodes, the voltage required to cause electricity to arc between electrodes decreases roughly logarithmically in response to a linear increase in altitude, over the range of altitudes between sea level and 150,000 feet.

For example, at sea level, about 30,000 VDC is required to initiate an arc across an electrode gap of 0.39 inches (9.9 mm). At 47,000 ft. (14,326 m) the arc level drops to about 1200 VDC. At 150,000 ft. (45,720 m), only about 300 VDC is required arc across the electrodes. Thus, increasing the voltages of engine-mounted electrical systems presents a double-layered technical challenge comprising the facts that: a.) Paschen's law dictates that increasing the voltage within a system logarithmically increases the likelihood of arcing and other unwanted passage of electrical energy at altitude; and b.) increased voltages produce more energetic, more destructive discharge events.

While it is theoretically possible to reduce the incidence of high-voltage arcing at altitude by increasing the separation between components, Paschen's law also describes a generally logarithmic relationship between altitude and separation necessary to avoid breakdown of a dielectric layer. For example, for a high voltage connector operating at 10,000 volts DC, the creep path (arc distance) between two conductors at sea level would be 1/2 inch (12.7mm), but, at 70,000 ft. (21,336 m) it would be 5 inches (127 mm). While a ten-fold increase in the spacing between all of the electrical components of an engine-mounted electrical system may avoid arcing and creep, such an approach would certainly impose significant size, weight and power ("SWAP") penalties, and would thus, likely be unworkable.

To reduce the possibility of dielectric breakdown and unwanted discharge events in engine-mounted electrical systems and other high voltage components of an aircraft operating at ambient air pressure without incurring the SWAP penalties associated with drastically increasing the separation between components, or moving onboard engine electronics to inside a pressurized fuselage, embodiments according to the present disclosure leverage existing compressors or sources of compressed air to provide an in situ flow of pressurized air to electrified components.

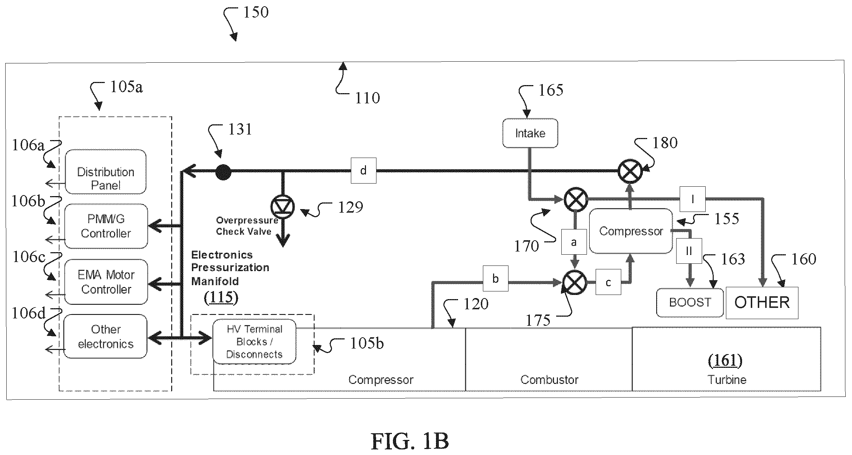

FIGURES 1A and 1B illustrate two examples of systems for in situ pressurization of aircraft electrical components in accordance with this disclosure. For consistency and convenience of cross reference, elements common to more than one of FIGS. 1A and 1B are numbered similarly. Further, while embodiments are described with reference to providing a pressurized environment for onboard electrical systems of a turbofan engine, the present disclosure is not so limited, and the systems described herein can be used on other aircraft electrical systems (for example, electrical systems in the wheel wells) exposed to ambient air pressure.

Referring to the illustrative of FIG. 1A, a first example system 100 according to this disclosure is shown. System 100 comprises one or more cases 105a and 105b disposed at locations (for example, nacelle 110) exposed to the ambient air pressure of an aircraft. In some cases, first and second cases 105a and 105b may be disposed within the fan case of nacelle 110. Each of first case 105a and second case 105b comprise a pressurizable container of a material (for example, aluminum, carbon fiber) which can handle equivalent delta pressure to maintain sea level atmospheric pressure (for example 14.7 pounds per square inch absolute ("PSIA") (101.4 kPa)) within the case through the flight envelope of the aircraft to which it is attached. Each of cases 105a and 105b include one or more venting holes 106a through 106e, which permit pressurized air to slowly leak from cases 105a and 105b, and when pressurized air is not being supplied to cases 105a and 105b, permit the air pressure within the cases to equilibrate with the ambient air pressure. As used in this disclosure, the expression "pressurizable" contemplates that an air pressure differential between the pressure inside cases 105a and 105b and the atmospheric air sufficient to reduce the risk of electrical arcing or other unwanted discharge can be achieved with a flow of air that constitutes a negligible draw on a compressed air source (for example, an electrically powered compressor, or a compressor bleed of a turbofan aircraft engine). For many applications, the flow of air required to achieve the pressure differential is 1 cubic foot per minute or less.

As shown in FIG. 1A, each of first case 105a and second case 105b may contain one or more high voltage aircraft electrical components, or other electrical systems for which keeping the component in an environment at the air pressure of sea level, or at a minimum, higher-than-ambient-at-altitude air pressure may be desirable. Examples of electrical components suitable for being enclosed in first and second cases 105a-105b include, without limitation, a high voltage (for example, 500+V) distribution panel, a permanent magnet machine/generator (PMM/G) controller, an electro-mechanical actuator (EMA) controller), and high voltage terminal blocks and disconnects. Each of first case 105a and second case 105b may be connected to an outlet of a manifold 115. According to some embodiments, manifold 115 comprises a hollow body defining an inlet, and one or more outlets for receiving pressurized air from a compressed air source and providing a flow of the compressed air at a suitable pressure (for example, 14.7 PSIA (101.4 kPa)) to each of first case 105a and second case 105b, such that the pressure within each of first and second cases 105a-105b is maintained at a desired pressure, even when the ambient air pressure within nacelle 110 is lower, such as when the aircraft is at a cruising altitude. Depending on the difference between the desired pressure within first case 105a and second case 105b and the pressurized air provided by the compressed air source, manifold 115 may also include a plenum distributing the pressurized air from the compressed air source.

In the explanatory example of FIG. 1A, the compressed air source can include the bleed 125 from the compressor 120 of the turbofan engine disposed within nacelle 110. In embodiments in which the compressor stage of the turbofan engine comprises both a low-pressure compressor (LPC) and a high-pressure compressor, the compressed air source may be one of a pre-existing LPC bleed from the low-pressure compressor, or a pre-existing inter-compressor (IC) bleed between the low-pressure compressor and high-pressure compressor. While the general trend within the aerospace industry is towards greater electrification and higher voltages within on-board systems, many engines retain bleed systems for diverting compressed air for use outside of the core or bypass gas paths, for example, as a source of cooling or buffering air.

Bleed 125 passes from compressor 120 to a regulating shutoff valve 127, which is configured to stop or restrict the flow of compressed air from bleed 125 in response to one or more threshold conditions. Examples of threshold conditions include, without limitation, the altitude of the aircraft (pressurization of cases 105a-105b can be unnecessary to sea level when the aircraft is at or near sea level), a power threshold of the engine (for example, the engine is at peak power and other systems have a greater need for the compressed air), or a power threshold of onboard electrical systems (for example, if one or more systems are not at high voltage, then the need to prevent unwanted altitude-related electrical discharges is reduced). In certain embodiments, shutoff valve 127 can be configured to modulate the pressure of the compressed air provided to cases 105a-105b. For example, the source pressure of the compressed air may be greater than 14.7 PSIA (101.4 kPa), and shutoff valve 127 may serve to limit the flow of compressed air to permit expansion and depressurization.

System 100 can further include one or more overpressure check valves 129 which are configured to ensure that air pressure in cases 105a and 105b does not exceed a threshold value (for example, air pressure at sea level), at overpressure can undesirably place unwanted excess mechanical strain on cases 105a and 105b without providing any performance benefits.

System 100 can also include one or more filters 131 disposed between the compressed air source (in this case, bleed 125) and manifold 115. Given the wide range of operating environments in which aircraft operate in, and the expansion of pressurized air from the compressed air source to the manifold, it is possible that water vapor in the pressurized air may evaporate along the between bleed 125 and cases 105a-105b. Similarly, it is possible that metallic contaminants, such as Calcia-magnesia-alumino silicate ("CMAS") may be present in the ambient air. As skilled artisans will appreciate, liquid water in proximity with electrical components can cause unwanted circuits and discharges, even at low voltages, and especially at high voltages. Similarly, if allowed to accumulate, metallic contaminants can create short circuits within electrical systems, which is equally undesirable. Accordingly, filter 131 removes one or more of dust or liquid water from the flow of pressurized air to cases 105a and 105b. In some embodiments filter 131 can be an in-line filter that traps dust and/or water droplets. In some embodiments, filter 131 can be a p-trap or other intake trap.

FIGURE 1B illustrates another example system 150 for pressurizing a case containing electrical components in accordance with this disclosure. By-products of the overall trend towards hybrid powertrains and greater overall electrification include, without limitation, the emergence of "bleed-free" engines, which may not include a pressure bleed from one or more of the low-pressure compressor, inter-compressor, or high-pressure compressor bleed.

As shown in FIG. 1B, instead of using a compressor bleed as the compressed air source, some embodiments use an electrically-powered compressor 155, such as the compressor used to provide compressed air for a high-pressure turbine cooling air boost 163, which controls the supply pressure of high-pressure turbine components. In certain embodiments, system 150 can divert some, or all, of the compressed air produced by electrically powered compressor to manifold 115 and cases 105a and 105b.

Referring to the illustrative example of FIG. 1B, system 150 comprises a fan intake 165, a first two-way switching valve 170, a second two-way switching valve 175 and a third modulating valve 180. Embodiments according to the present disclosure leverage the presence, within the pre-existing aircraft engine system, of electrically-powered compressor 155 as a source of pressurized air for a high-pressure turbine cooling air boost system 163.

Air from fan bypass of a turbofan engine can enter system 150 via fan intake 165. First two-way switching valve 170, can route the air received via fan intake 165 either directly to other systems 160 or to electrically-powered compressor 155. In a first position, first two-way switching valve 170 routes the air from fan intake 165 to second two-way switching valve 175 along a path "a". In a second position, first two-way switching valve 170 routes the air from fan intake 165 to other systems 160 along path "I".

As shown in FIG. 1B. second two-way switching valve 175 can, in a first position, receive air from first two-way switching valve 170 along the path marked "a" in the figure. In a second position, second two-way switching valve 175 can receive compressed air from a high-pressure bleed (shown in the figure as "b") from a compressor stage of a turbofan engine. Regardless of the inlet source, second two-way switching valve 175 outputs along path "c" to electrically-powered compressor 155.

System 150 further comprises a third modulating valve 180, which directs part or all of the pressurized air output from electrically-powered compressor 155 towards manifold 115 or high-pressure turbine cooling air boost system 163. In a first position, third modulating valve 180 directs a flow of pressurized air towards the manifold along the path shown as "d" in the figure. In a second position, third modulating valve 180 directs the flow of pressurized air to one or more high pressure turbine boost systems 163. In some embodiments, the turbine boost systems 163 include a turbine cooling and leakage air ("TCLA") system, which routs compressed air that bypasses the combustor stage of a turbojet to cool turbine stage 161.

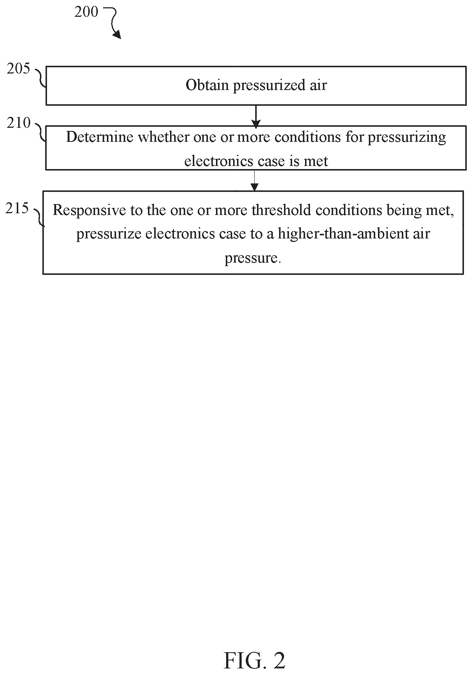

FIGURE 2 illustrates operations of an example method 200 for providing a pressurized environment for electrical components according to this disclosure. At operation 205, pressurized air is obtained from a compressed air source of an aircraft. The compressed air source can be an electrically driven compressor (for example, electrically-powered compressor 155). In embodiments in which the compressed air source is an electrically-powered compressor, the compressor may be external to a nacelle or portion of the aircraft containing one or more pressurized cases (for example, cases 105a and 105b) containing electrical components. Additionally, or alternatively, the compressed air source can be a bleed line (for example, the low-pressure compressor bleed, or an inter-compressor bleed) from the compressor stage of a turbofan engine.

At operation 210, the system determines whether a threshold condition for pressurizing cases to pressures above ambient pressure is met. The threshold condition can be one or more of an altitude of the aircraft (for example, a minimum altitude at which the dielectric properties of the air surrounding the electronics become more conducive to electrical discharge), an operating condition of the aircraft (for example, whether the engines are at full power and compressed air to be routed to the electronics cases may be needed elsewhere, such as in high-pressure turbine cooling air boost system 163, or other systems 160. In some embodiments, the threshold condition may be a power state of the electronics within the pressurized cases. For example, if an electrical system within a case is not being used, and thus, does not have any components at voltages presenting a risk of discharge, there is no need to pressurize its case, regardless of altitude.

Determination of whether the threshold condition for pressurizing cases can be performed mechanically, electrically, or electronically. For example, the threshold condition may be that the aircraft's landing gear is down, and lifting the landing gear mechanically releases a valve and permits the flow of compressed air to the pressurized cases. In another example, one or more of the two-way switches are electrically actuated may be connected to an electrical pressure sensor (for example, an altitude sensor). Similarly, in some embodiments, one or more of the two-way switches may be electrically actuated and operating under the control of a full authority digital engine control (FADEC) or other principal control system of the aircraft.

At operation 215, responsive to a determination that the threshold condition is satisfied, the system pressurizes one or more cases containing aircraft electronics to a greater-than-ambient air pressure by passing a flow of pressurized air from the compressed air source to a manifold connected to the one or more cases. The one or more cases may be pressurizable but may also include one or more vent holes to permit a slow (for example, less than 1 CFM (0.00047 m³/s) release of pressurized air from the cases. To maintain the air pressure within the one or more cases at a level sufficient to inhibit arcing or unwanted electrical discharges at altitude, while at the same time, avoiding placing unnecessary strain on the one or more cases, one or more overpressure check valves (for example, overpressure check valve 129) may be disposed between the compressed air source and manifold.

While embodiments according to the present disclosure have been described with reference to pressurizing electronics disposed in nacelles and other engine areas of turbofan-powered aircraft, the present disclosure is not so limited. Skilled artisans will appreciate that the systems and methods described herein may be practiced across a wide variety of aircraft and engine platforms for which unwanted electrical discharge at altitude. Embodiments according to the present disclosure may also be practiced in aircraft with turbojet, propeller, or hybrid gas turbine/electric propeller drivetrains. Further, embodiments according to the present disclosure are not limited to fixed wing aircraft and may also be practiced in lighter-than-air aircraft, missiles, and other vehicles which fly high enough to experience meaningful change in the dielectric constant of the air surrounding electrical systems.

It may be advantageous to set forth definitions of certain words and phrases used throughout this patent document. The terms "include" and "comprise," as well as derivatives thereof, mean inclusion without limitation. The term "or" is inclusive, meaning and/or. The phrase "associated with," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, have a relationship to or with, or the like. The phrase "at least one of," when used with a list of items, means that different combinations of one or more of the listed items may be used, and only one item in the list may be needed. For example, "at least one of: A, B, and C" includes any of the following combinations: A, B, C, A and B, A and C, B and C, and A and B and C.

The description in the present disclosure should not be read as implying that any particular element, step, or function is an essential or critical element that must be included in the claim scope. The scope of patented subject matter is defined only by the allowed claims. Use of terms such as (but not limited to) "mechanism," "module," "device," "unit," "component," "element," "member," "apparatus," "machine," "system," "processor," or "controller" within a claim is understood and intended to refer to structures known to those skilled in the relevant art, as further modified or enhanced by the features of the claims themselves.

While this disclosure has described certain embodiments and generally associated methods, alterations and permutations of these embodiments and methods will be apparent to those skilled in the art. Accordingly, the above description of example embodiments does not define or constrain this disclosure. Other changes, substitutions, and alterations are also possible without departing from the scope of this disclosure, as defined by the following claims.

## Claims

1. An electronics pressurization system (100; 150) comprising:
a compressed air source (125) providing pressurized air;
a manifold (115);
a case (105a; 105b) containing a first high-voltage electrical system, the case (105a; 105b) comprising a pressurizable vessel and a vent hole (106a, 106b, 106c, 106d; 106e);
wherein the compressed air source (125) is connected to the manifold (115), and the manifold (115) is connected to the case (105a; 105b); and
wherein the compressed air source (125) provides a flow of pressurized air, via the manifold (115) to the case (105a; 105b) to maintain an air pressure in the case (105a; 105b) at a higher-than-ambient pressure.

2. The electronics pressurization system of claim 1, further comprising at least one of a dust filter (131), a p-trap (131), or a water-catching filter (131) disposed between the compressed air source (125) and the manifold (115).

3. The electronics pressurization system of claim 1 or 2, further comprising an overpressure check valve (129) disposed between the compressed air source (125) and the manifold (115), wherein the overpressure check valve (129) is configured to reduce the flow of pressurized air to the case (105a; 105b), optionally wherein the overpressure check valve (129) is configured to ensure that the air pressure in the case (105a; 105b) does not exceed a threshold pressure.

4. The electronics pressurization system of any preceding claim, wherein the compressed air source comprises an electrically powered compressor (120).

5. The electronics pressurization system of claim 4, wherein the electrically powered compressor (155) is a compressor (155) for a turbine cooling air boost system (163) of a turbofan engine.

6. The electronics pressurization system of claim 5, further comprising:
a first switching valve (170);
a second switching valve (175); and
a third modulating valve (180);
wherein the first switching valve (170) is configured to receive gas from a fan intake (165), direct the received gas to the second switching valve (175) in a first position of the first switching valve (170), and direct the received gas elsewhere in a second position of the first switching valve (170);
wherein the second switching valve (175) is configured to direct gas to the electrically powered compressor (155), receive gas from the first switching valve (170) in a first position of the second switching valve (175), and receive gas from a high-pressure bleed (125) from a compressor stage (120) of the turbofan engine in a second position of the second switching valve (175); and
wherein the third modulating valve (180) is configured to receive gas from the electrically powered compressor (155), direct compressed gas to the manifold (115) in a first position of the third modulating valve (180) and direct the pressurized air to the turbine cooling air boost system (163) of the turbofan engine in a second position of the third modulating valve (180).

7. The electronics pressurization system of any preceding claim, wherein the compressed air source (125) comprises at least one of a low-pressure compressor (LPC) bleed (125), an inter-compressor (IC) bleed (125), or a high-pressure bleed (125) of a turbofan engine.

8. The electronics pressurization system of claim 7, further comprising a shut-off valve (127) disposed between an overpressure check valve (129) and the compressed air source (125), wherein the shut-off valve (127) is configured to stop the flow of air in response to a threshold condition for pressurizing the case (105a; 105b),
optionally wherein the threshold condition is at least one of:
an altitude threshold of the turbofan engine; or
a power threshold of the turbofan engine.

9. A method of pressurizing electronic systems at altitude, comprising:
obtaining, at a system (100; 150) comprising a compressed air source (125), pressurized air from the compressed air source (125);
determining whether one or more threshold conditions for pressurizing a case (105a; 105b) containing an electronic system is met; and
responsive to determining that the one or more threshold conditions for pressurizing the case (105a; 105b) containing the electronic system is met, pressurizing the case (105a; 105b) by to a higher-than-ambient pressure by providing a flow of pressurized air from the compressed air source (125) to the case (105a; 105b), via a manifold (115);
wherein the case (105a; 105b) comprises a pressurizable vessel and a vent hole (106a, 106b, 106c, 106d, 106e); and
wherein the compressed air source (125) is connected to the manifold (115), and the manifold (115) is connected to the case (105a; 105b).

10. The method of claim 9, wherein the pressurized air passes through one or more of a dust filter (131), a p-trap (131), or a water-catching filter (131) disposed between the compressed air source (125) and the manifold (115).

11. The method of claim 9 or 10, further comprising relieving excess pressure between the compressed air source (125) and the manifold (115) by opening an overpressure check valve (129) disposed between the compressed air source (125) and the manifold (115), wherein the overpressure check valve (129) is configured to reduce the flow of pressurized air to the case (105a; 105b), optionally wherein the overpressure check valve (129) is configured to ensure that an air pressure in the case (105a; 105b) does not exceed a threshold pressure.

12. The method of any of claims 9 to 11, wherein the compressed air source (125) comprises an electrically powered compressor (155).

13. The method of claim 12, wherein the electrically powered compressor (155) is a compressor (155) for a turbine cooling air boost (163), optionally wherein the system includes:
a first switching valve (170);
a second switching valve (175); and
a third modulating valve (180);
wherein the first switching valve (170) is configured to receive gas from a fan intake (165), direct the received gas to the second switching valve (175) in a first position of the first switching valve (170), and direct the received gas elsewhere in a second position of the first switching valve (170);
wherein the second switching valve (175) is configured to direct gas to the electrically powered compressor (155), receive gas from the first switching valve (170) in a first position of the second switching valve (175), and receive gas from a high-pressure bleed (125) from a compressor stage (120) of a turbofan engine in a second position of the second switching valve (175); and
wherein the third modulating valve (180) is configured to receive gas from the electrically powered compressor (155), direct compressed gas to the manifold (115) in a first position of the third modulating valve (180) and direct the pressurized air to the turbine cooling air boost (163) of the turbofan engine in a second position of the third modulating valve (180);
further comprising:
responsive to determining that the one or more threshold conditions for pressurizing the case (105a; 105b) containing the electronic system is met,
switching the first switching valve (170) from the second position of the first switching valve (170) to the first position of the first switching valve (170);
switching the second switching valve (175) from the second position of the second switching valve (175) to the first position of the second switching valve (175); and
switching the third modulating valve (180) from the second position of the third modulating valve (180) to the first position of the third modulating valve (180).

14. The method of any of claims 9 to 13, wherein the compressed air source (125) comprises at least one of a low-pressure compressor (LPC) bleed (125) an inter-compressor (IC) bleed (125), or a high-pressure bleed (125) of a turbofan engine.

15. The method of claim 14, wherein the system includes a shut-off valve (127) disposed between an overpressure check valve (129) and the compressed air source (125), and comprising
opening the shut-off valve (127) to permit the pressurized air to flow to the manifold (115) in response to determining that the one or more threshold conditions for pressurizing the case (105a; 105b) is met,
optionally wherein the one or more threshold conditions comprises at least one of:
an altitude threshold of the turbofan engine; or
a power threshold of the turbofan engine.
